(19) Europäisches Patentamt
European Patent Office
Office européen des brevets

(11) **EP 0 487 172 B1**

(12) **EUROPEAN PATENT SPECIFICATION**

(45) Date of publication and mention
of the grant of the patent:
**11.09.1996 Bulletin 1996/37**

(51) Int. Cl.$^6$: **B28B 1/24, B28B 7/34**

(21) Application number: **91203145.7**

(22) Date of filing: **31.05.1989**

(54) **Molding method and molding apparatus for producing ceramics**

Formgebungsverfahren und Formvorrichtung zum Herstellen von keramischen Gegenständen

Procédé et dispositif de moulage pour la fabrication d'éléments en céramique

(84) Designated Contracting States:
**BE DE FR GB**

(30) Priority: **01.06.1988 JP 134833/88**
**24.12.1988 JP 326933/88**

(43) Date of publication of application:
**27.05.1992 Bulletin 1992/22**

(62) Application number of the earlier application in
accordance with Art. 76 EPC: **89305442.9**

(73) Proprietor: **NGK INSULATORS, LTD.**
**Nagoya City Aichi Pref. (JP)**

(72) Inventors:
• **Matsuhisa, Tadaaki**
**Kasugai City, Aichi Pref. (JP)**
• **Kato, Shigeki**
**Nagoya City, Aichi Pref. (JP)**
• **Iwasaki, Hiroyuki,**
**B-406 Pavilion Higashigaoka**
**Nagoya City, Aichi Pref. (JP)**

(74) Representative: **Paget, Hugh Charles Edward et al**
**MEWBURN ELLIS**
**York House**
**23 Kingsway**
**London WC2B 6HP (GB)**

(56) References cited:
**EP-A- 0 140 682**      **EP-A- 0 300 681**
**DE-A- 3 942 666**      **FR-A- 1 059 585**

## Description

The present invention relates to a method for molding a ceramics article and an apparatus therefor.

Slip casting and injection molding are known as molding methods for producing ceramics structural parts, such as turbine wheels and the like, having a complicated shape.

Slip casting is a method in which a slurry of ceramics powder is poured into a casting die made of gypsum or the like and solidified therein to obtain a shaped article. In this method using a gypsum die or the like, a shaped article having a complicated shape can be produced, but the shaped article is often poor in the dimensional accuracy due to the poor accuracy of the die. Moreover, a long time is generally required in the molding due to the use of a large amount of water as a plasticizing medium.

A pressure cast molding method is a method for producing a shaped article, wherein a slurry of ceramics powder is poured into a permeable casting die, the slurry is pressed to exhaust a large amount of water through the permeable casting die, and to solidify the slurry. In this method, a shaped article having a complicated shape can be produced, but the shaped article is poor in the shape retention, and is difficult to release from the die, and hence a long time is required in the molding.

The injection molding method is a method wherein a homogeneous mixture of ceramics powder with various thermoplastic organic binders is heated, and then the mixture is injected into a die and cooled therein to obtain a shaped article. In this injection molding method, a shaped article having a complicated shape can be produced and further this method is adapted to the mass production of shaped articles. However, the shaped article must be heated for a long period of time of generally at least 100 hours in order to prevent the shaped article from being cracked or deformed during the removal step of organic binder, that is, during the degreasing step. Moreover, this injection molding method has been used only in the production of a shaped article having a small wall thickness.

JP-A-61-10,405 discloses a method, wherein a slurry consisting of a mixture of fine ceramics, such as $Al_2O_3$, SiC, $Si_3N_4$, $ZrO_2$ or the like, water and an organic additive is subjected to an injection molding to produce a shaped article. However, in this method, a particular porous die is used, and a pressure is kept to 100-600 kg/cm$^2$ after injection, whereby water is removed from the slurry to obtain a green shaped article. Therefore, a complicated operation must be carried out in order to take out the green shaped article from the die.

EP-A-0300681 (being published on 25th January 1989) describes a process in which $Si_3N_4$ containing a sintering assistant is mixed with water, methyl cellulose, triethylamine as a deflocculant and n-octyl alcohol as a defoaming agent to obtain a slip. The slip is deaired in a vacuum under stirring. The treated slip is poured into a mold, part of the surface of which is coated with a material having a contact angle of more than 90°.

The conventional compression molding method or transfer molding method carried out in the production of ceramics shaped article is relatively simple in operation, but has been used only in the production of small and thin-wall articles, such as chinawares and the like, and has not been used in the production of the above described structural parts, such as turbine wheel and the like, having a complicated shape.

The present invention aims to eliminate the drawbacks of the above described known techniques, and to decrease significantly the production steps and the production time in a method for producing a ceramics sintered article, wherein a shaped article is produced through an injection molding, transfer molding or the like, water and organic binder are removed from the shaped article, and then the shaped article is fired. The invention can also provide a method capable of producing monolithically a thick-wall sinterered article, such as turbine wheel and the like, having a complicated shape through an injection molding, compression molding or transfer molding. The inventors have made various investigations for the production of a thick-wall sintered article having a complicated shape by a method, wherein a ceramics batch containing a plasticizing medium generally being water which is not used in the conventional methods, and further containing an organic binder as a plasticizer, is formed into a shaped article having a complicated shape through an injection molding, compression molding or transfer molding, and the shaped article is fired.

The present invention is set out in claims 1 and 7.

For a better understanding of the invention, reference is made to the accompanying drawings, in which:

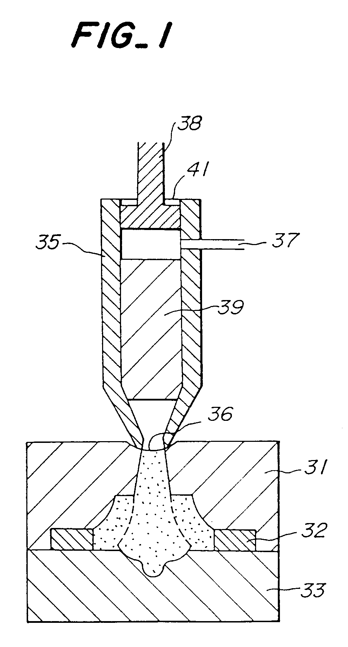

Figs. 1-3 are cross-sectional views of molding apparatuses for ceramics exemplified in the examples of the present invention.

The present invention will be explained mainly with respect to the case in which infection molding is used. In the present invention, compression molding or transfer molding can be carried out in fundamentally the same manner as injection molding.

In the present invention, by way of example, a ceramics powder containing a sintering aid is mixed with water as a plasticizing medium and an organic binder as a plasticizer to produce a batch having good moldability and shape retention. The resulting batch is injection molded to produce a shaped article having a high dimensional accuracy in a high yield in the release from the die. Then to produce a sintered article from the molded ceramics the water and the organic binder are removed from the green shaped article, and then the shaped article is fired, whereby a sintered article can be obtained in a short time. The sintered article generally has a complicated shape and a large thickness and is required to have a high strength and a high reliability. For example, the sintered article is a structural ceramics part, such as ceramic gas turbine wheel or the like, and when a sintered article has a defect, such as very small gap, void or the like formed therein, the sintered article is no longer commercially valuable. Therefore, the above described batch to be used in the present invention should have such properties that (1) the batch is produced by means of a vacuum-kneading machine or the like so as not to contain bubbles, which cause the defects in the resulting sintered article, (2) the batch has a high shape retention and hence can give a shape retention to the resulting shaped article without removing water during the molding, (3) the batch has a high fluidity and hence does not generate defects, such as weld line and the like, during the molding, and the like. Clay and the like, which are used in old ceramics technology and the like, are not included in the batch to be used in the present invention.

The batch to be used in the present invention contains a proper amount of water which is generally used as a plasticizing medium, and a proper amount of an organic binder used as a plasticizer.

The use of a proper amount of water has such merits that (1) water can be easily removed without causing defects in the resulting shaped article within a short period of time in the removing step of water due to the reason that water does not thermally decompose and further has a low thermal expansion coefficient, (2) a binder can be easily removed in a short period of time by a rapid heating in the after-treatment step based on the reason that a porous shaped article is formed due to the removal of water from the shaped article, (3) the binder can be easily removed from a thick shaped article, for example, a turbine wheel due to the same reason as described in the above item (2), and the like.

The use of a proper amount of an organic binder has such merits that, when an organic binder, for example, a thermally gelatinizable and curable organic binder is used, a high strength can be further given to the shaped article by the thermal gelatinization and curing of the batch during the molding, and the shape retention of the shaped article can be increased.

The removal of water, that is, drying, can be carried out in an ordinarily used constant temperature-constant humidity chamber or the like, and the removal of the binder can be carried out in an ordinarily used oxidizing atmosphere furnace (calcination furnace) or the like.

In the injection molding method using the batch described here, the binder can be removed (degreased) in a time shorter than the time required in the removal of binder in a conventional injection molding which uses a large amount of an organic plasticizer, and moreover a shaped article can be obtained in a molding time shorter than the molding time required in a cast molding method or pressure cast molding method, which uses a large amount of water. When, a compression molding method or transfer molding method is carried out by using the above described batch, a structural ceramics having a complicated shape and a large thickness, which has not hitherto been obtained by the conventional compression molding method or conventional transfer molding method, can be obtained.

As the method and apparatus for evaluating the fluidity of the batch, a rheometer is generally used, but a flow tester or melt indexer used in a conventional injection molding can be used as well.

The ceramics powder to be used in the present invention includes any of non-oxide ceramics materials, such as carbides and nitrides, for example, silicon carbide, silicon nitride, sialon, boron nitride and the like, and oxide ceramics materials, such as zirconia and the like.

The ceramics material can be used alone or in admixture of at least two members depending upon the use purpose of the resulting shaped article. When the aimed shaped article is a structural ceramics part or the like, which is required to have high temperature resistance and high mechanical strength, a ceramics material consisting mainly of silicon nitride is preferably used.

In the ceramics powder to be used in the present invention, it is preferable to satisfy such conditions that (1) the ceramics powder can be homogeneously mixed with water and an organic binder and can be formed into a homogeneous batch having high moldability and shape retention through a vacuum-kneading, (2) the ceramics powder is low in the slip resistance between fellow particles, is excellent in the fluidity and does not cause defects, such as flow mark and the like, in the resulting shaped article, (3) defects are not formed during the drying of the resulting shaped article and the removal of the binder, and the strength of the resulting shaped article is not decreased, and the like. As the ceramics powder which satisfies these conditions, a powder whose particle size satisfies the following equation (a) is preferably used.

$$\frac{\text{average particle size calculated from the particle size distribution}}{\text{specific surface area particle size calculated by the adsorption method}} \leqq 5 \qquad (a)$$

In the present invention, the average particle size calculated from the particle size distribution in the above described equation (a) is an average particle size calculated from the particle size distribution by the laser diffraction system measured by means of a microtrack 7995-30 type particle size distribution measuring apparatus made by Leeds and Northrup Co. The specific surface area particle size calculated by the adsorption method in the above described equation (a) is a specific surface area particle size obtained by a calculation by the following equation (b) from the specific surface area, which is measured by means of, for example, a Flowsorb 2300 type made by Shimadzu Corporation according to the BET adsorption method. In this case, the density is inherent to the ceramics powder used. For example, the density of silicon nitride ($Si_3N_4$) is 3.18.

$$\text{specific surface area particle size by adsorption method} = \frac{6}{\text{density} \cdot \text{specific surface area}} \qquad \text{(b)}$$

The batch obtained from the ceramics powder having a ratio of 5 or less of average particle size calculated from the particle size distribution to specific surface area particle size calculated by the adsorption method in the above described equation (a) is excellent in the moldability and is free from the generation of defects in the resulting shaped article and further is free from the defects in the resulting sintered article. While, when the ratio is more than 5, the batch is poor in the fluidity, and the resulting shaped article has a flow mark formed during the molding, and further has pores and cracks formed therein.

In the present invention, a part of the molding surface of an impermeable die of the die assembly to be poured with a ceramics batch is made of a material having a contact angle with water of at least 80 degrees. That is, in a die assembly consisting of an impermeable die or consisting of a combination of a permeable die and an impermeable die, a part of the molding surface of the impermeable die is formed of a material, such as a fluororesin, for example, polytetrafluoroethylene, or the like, having a contact angle with water of at least 80 degrees, preferably at least 85 degrees, more preferably at least 90 degrees, whereby a shaped article having an improved mold release property is obtained.

When a material having a contact angle with water of smaller than 80 degrees is used, the resulting shaped article is poor in the mold release property. Particularly, when it is intended to produce a shaped article, such as ceramic turbine rotor or the like, having a complicated shape, a material having a contact angle with water of at least 90 degrees is preferably used due to the reason that the use of a material having a contact angle with water of at least 90 degrees results in a shaped article free from the damage due to mold release.

As the material having a contact angle with water of at least 80 degrees, which constitutes a part of the molding surface of the impermeable die, there can be used fluororesins, such as polytetrafluoroethylene, polyvinyl fluoride, polyvinylidene fluoride, polytrifluorochloroethylene, tetrafluoroethylene-perfluoroalkyl vinyl ether copolymer and the like, and further polypropylene, various waxes and the like.

As the means for constituting a part of the molding surface of an impermeable die by the above described material, the following means can be used. That is, although an impermeable die itself may be produced by these materials, it is preferable from the economical viewpoint to cover the molding surface of an impermeable die with these materials. When fluororesin and the like are used as the above described material, an impermeable die made of metal can be easily and directly coated with the fluororesin and the like.

As the permeable die to be preferably used in the present invention, commonly known permeable dies can be used. It is necessary that the permeable die has a good air permeability in order that air is effectively removed from the batch during the molding and further can secure the strength of the die itself. As the permeable die, a die having an average hole diameter of 0.1-50 μm is generally used, and further a die having a two-layered structure having different average hole diameters, which consists of a combination of a molding surface layer having an average hole diameter of 0.1-50 μm and a lower part layer having a large average hole diameter of about 50-500 μm, can be used as well. The material of the permeable die is not limited, and gypsum having a good water absorbing property, and further resin, ceramics, metal and their composite material can be used in the permeable die.

As the impermeable die to be used in the present invention, commonly used impermeable dies can be used, and for example, metal die and further synthetic resin die and rubber die can be used.

The sintering aid to be used in the present invention may be selected from oxides, such as alumina, magnesia, beryllia, cerium oxide, strontium oxide, titania, zirconia, yttria and the like; composite oxides, such as beryllium titanate, lead titanate zirconate and the like; multi-component oxides, such as mullite, aluminum zirconium titanate and the like; and the like. The sintering aid is preferred to have the same particle shape as that of the ceramics powder.

In the present invention, the amount of water or the like to be mixed as a plasticizing medium with a ceramics powder is preferably 10-50 parts by weight based on 100 parts by weight of the ceramics powder to be contained in a batch to be molded into a shaped article. When the amount of water or the like is less than 10 parts by weight, the resulting mixture is poor in the kneading ability and a homogeneous batch can not be obtained. When the amount of water exceeds 50 parts by weight, a slurry like batch is formed, and a dehydration treatment is necessary during the molding. Therefore, the use of less than 10 parts by weight or more than 50 parts by weight of water or the like is not preferable.

The organic binder to be used in the present invention may be selected from water-soluble or water-absorbing organic compounds, for example, water-soluble cellulose ether derivatives, such as methyl cellulose, hydroxypropyl methyl cellulose and the like; water-soluble polymers, such as polyvinyl alcohol, polyethylene glycol and the like; and water-absorbing polymers consisting of the derivatives of these water-soluble cellulose ether derivatives and water-soluble polymers. Preferable organic binders are polymers at least capable of being thermally gelated and cured (The term "thermally gelated and cured" means a phenomenon, for example, described in a preprint "As to extrusion molding of new ceramics by using methyl cellulose" in the "New ceramics adhesion technic lecture meeting" held in February in 1984). The preferable organic binders include, for example, methyl cellulose, hydroxypropyl methyl cellulose, alkyleneoxide cellulose derivatives and the like. The organic binder acts to improve the water retention of the batch to be used in the present invention and further to maintain the plasticity of the batch. When a polymer capable of being thermally gelated and cured is used as an organic binder, the batch is thermally gelated and cured during the molding, and the resulting shaped article has an improved shape retention and an improved mold release property.

The amount of the organic binder to be contained in the batch to be used in the present invention is preferably 0.1-15 parts by weight based on 100 parts by weight of the ceramics powder contained with batch. When the amount of the organic binder is less than 0.1 part by weight, the resulting shaped article has a low strength and is poor in the shape retention. When the amount the organic binder exceeds 15 parts by weight, a long time is required in the removal of the binder from the resulting shaped article and further cracks are apt to be formed in the shaped article.

The batch to be used in the present invention may contain surfactant and the like in addition to the above described ceramics powder, sintering aid, plasticizing medium and organic binder.

In the present invention, the above described ceramics powder, sintering aid, water and organic binder are formulated, the resulting mixture is kneaded, and the homogeneous mixture is deaerated by a vacuum kneading to produce a batch. In the production of the batch, all the components may be mixed together at a time, but it is preferable to mix first a ceramics powder with a sintering aid. In this case, although the pulverized particle of the ceramics powder may be mixed with the pulverized particle of the sintering aid, it is preferable to pulverize a mixture of the ceramics powder and the sintering aid into a particle size to be used in the present invention. The pulverization and mixing can be carried out by the use of pebbles formed of silicon nitride or the like, in an aqueous medium by means of Attritor.

The pulverized mixture of the ceramics powder and sintering aid is then dried. Iron in the mixture may be occasionally removed before the drying. Removal of iron can be effected by using, for example, a wet type electromagnetic filter or the like. The drying is preferably carried out by a spray drying by means of a spray dryer. The treatment by the spray drier has such a merit that the drying and granulation can be concurrently effected, and organic binder can be easily removed in the later step. After drying, the pulverized mixture can be occasionally made into a uniform particle size by means of a vibrating sieve.

The above described dried pulverized mixture is kneaded together with water and an organic binder, and the kneaded mixture is deaerated generally under vacuum by means of a vacuum kneading machine to produce, for example, a cylindrical batch.

In the vacuum kneading step, any vacuum degree can be used in so far as the vacuum kneading system is kept to a reduced pressure. However, a vacuum degree of not lower than 60 cmHg is generally used. When the vacuum kneading system is kept to a reduced pressure, water is diffused violently to form rapidly a water film on the ceramic particles, whereby a homogeneous batch can be obtained. In the production of a product, such as ceramic turbine wheel, which is demanded to have a high strength, the vacuum degree is preferably not less than 70 cmHg, because air bubbles contained in the batch often causes breakage of the product.

As the kneading machine (extruder) to be used for the production of batch, there can be used, for example, pugmill, vacuum pugmill, auger machine, piston-type extruder and the like, and their combination.

In order to produce a homogeneous batch having no defects, it is necessary to select properly the structures of auger screw, spacer, nozzle and the like, the extrusion speed, the temperature of batch, and other conditions.

When a vacuum kneading machine is used, a homogeneous batch is generally obtained. However, when it is difficult to produce a homogeneous batch by the use of the vacuum kneading machine, the batch may be further subjected to a hydrostatic pressure isostatic pressing by means of a rubber press machine to deaerate the batch and to produce a homogeneous batch. The batch obtained by the above described treatments can be directly used in the molding in present invention, or the batch may be once storaged in a dark and cold place and then used in the molding in the present invention.

It is preferred in the present invention that a kneaded ceramics batch containing water and an organic binder is once poured into the batch-retaining chamber and held therein. The vacuum kneading step is separated from the molding step, whereby the molding conditions, such as molding pressure, pouring speed and the like, can be easily set depending upon the desired shaped article, and moreover a homogeneous batch having a uniform temperature distribution can be produced, and a shaped article having no molding defects can be obtained. Furthermore, a material having a contact angle with water of at least 80 degrees is used in that portion of the batch-retaining portion which is contacted with the batch, whereby the friction between the batch-retaining portion and the batch can be made low, and the pressure loss and the frictional heat can be decreased. Therefore, a material having a contact angle with water of at least 80 degrees in the contacting portion of the batch-retaining portion with batch is used.

As the batch-retaining portion (that is, receiving and retaining means), a plunger-type extruder is preferably used. Further, other ordinary cylinder and the like can be used as well.

The dimension of the inlet for the batch of the batch-retaining portion to the die must be set depending upon the shape, volume and the like of the desired shaped article, and a larger inlet is more preferable in order to decrease the friction between the batch-retaining portion and the batch.

The pressure for pouring a ceramics hatch into the die is preferably at least 500 kPa (5 kg/cm$^2$), more preferably at least 1 MPa (10 kg/cm$^2$). When the pressure is lower than 500 kPa (5 kg/cm$^2$),the batch can not be filled in the die, and the resulting shaped article has a low density and hence is easily deformed.

It is preferable that the ratio (pouring speed/surface area of shaped article) of the pouring speed (cm$^3$/sec) of a ceramics batch under pressure into the die to the surface area (cm$^2$) of the resulting shaped article is within the range from 0.7 to 10. When the ratio is less than 0.7, defects, such as cracks, creases and the like, are apt to be formed on the surface of the resulting shaped article. While, even when the above described ratio is higher than 10, the molding can be carried out, but a large size molding apparatus is required, and hence the operability is poor, and an expense more than the necessary expense is required, and hence the use of the above described ratio of more than 10 is not economic.

The term "injection molding" (for example, vertical or horizontal plunger-type or inline screw-type injection die is used) to be used in the present invention means a molding, wherein a batch is poured into a die, such as a metal die, closed through an injection molding nozzle or the like, that is, poured into the injection-introducing portion of a die and into a die having the shape of a shaped article, which injection-introducing portion consists of an injection sprue, an injection runner and an injection gate or consists of injection sprue and an injection gate (direct gate). Any of commonly known injection molding nozzle can be used. The shape of the injection-introducing portion is not particularly limited, but an injection-introducing portion, wherein the injection sprue of direct gate or the injection runner is tapered towards the injection gate in a certain angle, is preferably used. The tapered angle is generally 2-10 degrees with respect to the axis of the injection sprue of direct gate or to the axis of the injection runner.

The molding condition in the injection molding is properly selected depending upon the kinds of batch, extruder, die and the like. In the present invention, the injection molding is generally carried out under a condition of a pressure of 0.5-100 MPa (5-1,000 kg/cm$^2$), a pressing time of 1-200 seconds and an injection speed of 50-1,000 ml/s. The batch temperature is generally 5-20°C.

The compression molding and transfer molding is carried out by the use of a commonly known molding apparatus, which uses a die having a shape corresponding to the aimed shaped article, depending upon the purpose. In these methods, a batch having a proper shape is generally arranged in a die or in a cylinder, and the batch is compressed by means of an upper die or piston to deform the batch along the shape of the desired shaped article and to form the desired shaped article by utilizing the plasticity of the batch.

The batch poured into a die having a shape of a shaped article is molded into a shaped article in the die. In this case, when a batch containing a thermally gelatinizable and curable organic binder is used, the batch is thermally gelated and cured by the action of the organic binder contained in the batch. When a die has been previously heated to a temperature near the thermally gelating and curing temperature of the organic binder, at which the organic binder is thermally gelated and cured, a shaped article having a high shape retention can be obtained, and therefore the shaped article can be released from the die in a short period of time, and further the shaped article has an improved strength due to the thermal gelation and curing of the organic binder, and hence the shaped article has a high dimensional accuracy, and can be easily handled. Therefore, a shaped article can be produced in a high yield in the molding. In this case, the condition and the like of the die, for example, of the metal die, is properly selected depending upon the kind and addition amount of an organic binder, pouring temperature of the batch and the water content in the batch, and the shape and dimension of the aimed shaped article. In general, the die temperature is set to a temperature within the range between the temperature, which is 10°C lower than the thermal gelatinization and curing temperature of a thermally gelatinizable and curable organic binder, and the temperature, which is 25°C higher than the thermal gelatinization and curing temperature of the organic binder. For example, in the case where methyl cellulose is used as an organic binder, when a die is previously heated, in general, to about 45-75°C, the batch can be thermally gelated and cured. It is desirable that a thermally gelatinizable and curable organic binder is used in the production of a product having a complicated shape, such as turbine wheel and the like. It is not always necessary that a thermally gelatinizable and curable organic binder is used in the production of a shaped article having a simple shape.

After injection molding, compression molding or transfer molding, the green shaped article is dried and calcined, and after water and organic binder are removed from the calcined shaped article, the calcined shaped article is fired to obtain an aimed sintered article.

The drying is carried out by the moisture conditioning drying, induction drying, electric current drying, induction heating drying and the like, and is generally carried out by the moisture conditioning drying by means of a constant temperature-constant humidity drying apparatus. The drying temperature is varied depending upon the size and the like of the shaped article, but is generally 40-100°C. The drying is carried out until the humidity of the shaped article becomes about 10%. The injection molded and dried shaped article may be occasionally subjected to a hydrostatic pressure isostatic pressing. After drying, the organic binder is removed from the shaped article. The removal of the organic binder, although the removal condition is varied depending upon the kind of the shaped article, is generally carried out by heating the dried shaped article at a heating rate of 10°C/hr-100°C/hr up to about 500°C and keeping the heated shaped article at about 500°C for 1-10 hours. In this heating, the organic binder is burnt and removed. The shaped article is generally burnt by open flame, but may be burnt under a state that the shaped article is embedded in $A\ell_2O_3$ powder. After the removal of the binder, the shaped article may be subjected to a hydrostatic pressure isostatic pressing.

After the removal of the binder, the shaped article is fired to obtain a sintered article. The firing condition is properly determined depending upon the kind of ceramics, the use purpose of the sintered article, and the like. For example, when a silicon nitride sintered article is produced, it is preferable that the shaped article is fired under a nitrogen gas atmosphere at a temperature of 1,600-1,800°C in the case of pressureless sintering or at a temperature of 1,700-2,000°C in the case of pressure sintering. When a silicon carbide sintered article is produced, it is preferable that a shaped article is subjected to a pressureless sintering under an argon atmosphere kept at 1,900-2,200°C. Further, when a partially stabilized zirconia sintered article is produced, it is preferable that a shaped article is fired under an air atmosphere kept to 1,300-1,500°C under an atmospheric pressure.

The following examples are given for the purpose of illustration of this invention and are not intended as limitations thereof.

## Example 1

To 100 parts by weight of SiC powders having an average particle size of 0.7 μm and containing a sintering aid were added 25 parts by weight of water, 5 parts by weight of a binder used as a molding aid and 1 part by weight of a dispersing agent, and the resulting mixture was kneaded in a pressure kneader. The resulting mixture was subjected to a vacuum kneading under a vacuum degree shown in Table 1 and then extruded to produce a batch having a dimension of 60 mmox100 mm length. Referring to Fig. 1, the resulting batch 39 was poured into a batch-retaining chamber 35 of a molding apparatus for a turbine rotor (a blade diameter: 85 mm∅, and blade height: 30 mm), which molding apparatus comprised the above described batch-retaining chamber 35 and a die assembly comprising impermeable dies 31 and 33 and an impermeable slide core 32, through an inlet 41 of the batch-retaining portion, and then a pressure piston 38 was moved downwardly, and the inlet 41 was tightly closed, and then a vacuum-deaeration of the batch-retaining chamber 35 was effected through an exhaust port 37. Then, the batch 39 was poured into the dies assembly through an inlet 36 (12 mmφ) under a pressure shown in Table 1, and after 20 seconds, the shaped article was released from the die to obtain a green shaped article shown in Table 1.

The surface of the article-shaping cavity formed by the impermeable dies 31,33 and the impermeable die core 32 has a Teflon coating (polytetrafluoroethylene, contact angle θ : 108°).

For comparison, a batch was produced by merely carrying out the kneading by means of the pressure kneader without carrying out the vacuum-kneading, and further a molding operation was effected with the use or without the use of the die assembly having a Teflon coating formed on the surface of the shaped article-shaping cavity, whereby a green shaped article shown in Table 1 was obtained.

The resulting green shaped article was heated up to 100°C at a heating rate of 5°C/hr and was kept at 100°C for 5 hours in a constant temperature-constant humidity chamber, whereby the shaped article was dried while decreasing gradually its humidity from 98%.

As seen from Table 1 that, when the molding method and the molding apparatus of the present invention are used, a good shaped article having a good mold release property and having neither apparent cracks nor cracks after drying can be obtained.

## Table 1

| | Vacuum kneading | Vacuum degree in vacuum kneading (cmHg) † | Molding condition | | Green shaped article | | | Dried shaped article |
|---|---|---|---|---|---|---|---|---|
| | | | Pressure (kg/cm$^2$)# | Teflon coating | Mold release property | Apparent cracks | Defects due to unfilled portion in die | Cracks after drying |
| Sample No. 4-1 (this invention) | effected | 10 | 5 | effected | good | none | none*1 | none |
| Sample No. 4-2 (this invention) | ditto | 40 | 10 | ditto | good | none | none | none |
| Sample No. 4-3 (this invention) | ditto | 70 | 100 | ditto | good | none | none | none |
| Sample No. 4-4 (this invention) | ditto | 75 | 200 | ditto | good | none | none | none |
| Comparative sample No. 4-1 | ditto | 0 | 50 | ditto | good | none | none | observed |
| Comparative sample No. 4-2 | ditto | 0 | 200 | not effected | poor | none | none | observed |
| Comparative sample No. 4-3 | not effected | - | 100 | effected | good | observed | none | observed |

*1: Very small defects due to unfilled portions in die are observed in 2 portions in the tip portion of blade.

† : 1 cmHg = 1.3 kPa

# : 1 kg/cm$^2$ = 100 kPa

EP 0 487 172 B1

Example 2

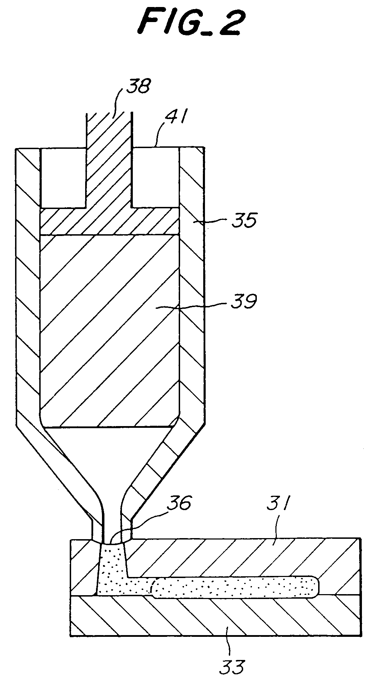

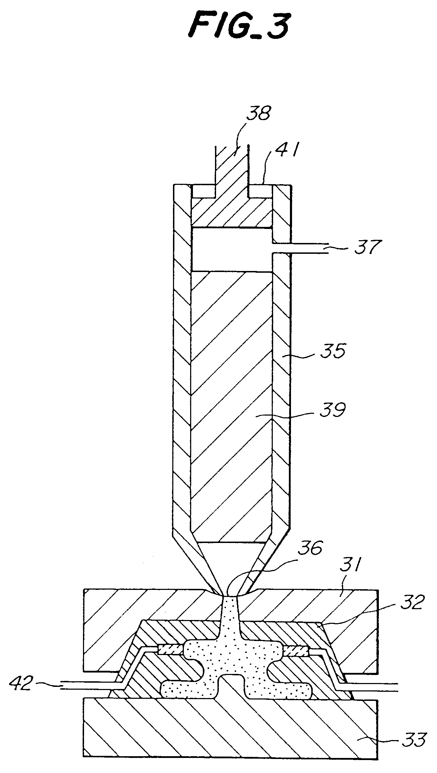

To 100 parts by weight of $Si_3N_4$ powders having an average particle size of 0.8 μm and containing a sintering aid were added 24 parts by weight of water, 3 parts by weight of a binder used as a molding aid and 0.5 part by weight of a dispersing agent, and the resulting mixture was kneaded by means of a pressure kneader. The homogeneous mixture was vacuum-kneaded under a vacuum degree of 100 kPa (76 cmHg) and extruded into a batch having a dimension of 60 mm∅×300 mm length. Each of a test piece die (60mmL×60mmW×7mmH) illustrated in Fig. 2, and a piston cavity die (outer diameter: 100 mm∅, a height: 25 mm) illustrated in Fig.3 and a turbine rotor die (blade diameter: 75 mm∅, blade height: 35 mm) was set in a molding apparatus, the above obtained batch 39 was poured into a batch-retaining chamber 35 through the inlet 41 of the batch-retaining chamber 35, a pressure piston 38 was moved downwardly, the inlet 41 of the batch-retaining chamber was tightly closed, and then a vacuum deaeration of the batch-retaining chamber 35 was effected through an exhaust port 37. Then, the deaerated batch was poured under pressure into a die through an inlet 36 of the die under a molding condition shown in Table 2 and molded therein for 15 seconds under a molding condition shown in Table 2, and the resulting mass was released from the die to obtain a green shaped article shown in Table 2.

The surface of the impermeable dies 31 and 33 and the surface of the impermeable slide core 32 had been coated with Teflon (polytetrafluoroethylene, contact angle θ with water: 90 degrees).

It can be seen from Table 2 that the use of the molding method and molding apparatus of the present invention can result in an excellent shaped article having good mold release property and having no apparent cracks.

Further, it can be seen from Table 2 that, when a permeable die is merely arranged in that portion of a die which is poor in the air permeability or when a die is vacuum-deaerated through a permeable die, a shaped article having more excellent appearance can be obtained.

Further, it can be seen from Table 2 that, when the ratio of the pouring speed under pressure to the specific surface area of shaped article is at least 0.7, a shaped article having neither apparent cracks nor creases can be obtained.

Table 2(a)

| | Permeable die | | Vacuum deaeration from permeable die | | Pouring speed (cm³/sec) | Surface area of shaped article (cm²) | Ratio of (Pouring speed)/(Surface area of shaped article) | Pressure (kg/cm²)* |
|---|---|---|---|---|---|---|---|---|
| | Used | Not used | Effected | Not effected | | | | |
| Sample No. 6- 1 (this invention) | | ○ | | ○ | 100 | 89 | 1.1 | 100 |
| Sample No. 6- 2 (this invention) | | ○ | | ○ | 300 | " | 3.4 | 100 |
| Sample No. 6- 3 (this invention) | | ○ | | ○ | 500 | " | 5.6 | 100 |
| Sample No. 6- 4 (this invention) | | ○ | | ○ | 300 | " | 3.4 | 100 |
| Sample No. 6- 5 (this invention) | | ○ | | ○ | 100 | 202 | 0.5 | 150 |
| Sample No. 6- 6 (this invention) | | ○ | | ○ | 150 | " | 0.7 | 150 |
| Sample No. 6- 7 (this invention) | | ○ | | ○ | 200 | " | 1.0 | 100 |
| Sample No. 6- 8 (this invention) | | ○ | | ○ | 300 | " | 1.5 | 200 |
| Sample No. 6- 9 (this invention) | | ○ | | ○ | 200 | " | 1.0 | 100 |
| Sample No. 6-10 (this invention) | | ○ | | ○ | 200 | 264 | 0.8 | 200 |
| Sample No. 6-11 (this invention) | | ○ | | ○ | 300 | " | 1.1 | 100 |
| Sample No. 6-12 (this invention) | ○ | | | ○ | 300 | " | 1.1 | 200 |
| Sample No. 6-13 (this invention) | ○ | | ○ | | 300 | " | 1.1 | 200 |
| Sample No. 6-14 (this invention) | | ○ | | ○ | 100 | " | 0.4 | 200 |
| Sample No. 6-15 (this invention) | ○ | | | ○ | 150 | " | 0.6 | 200 |

* 1 kg/cm2 0 100 kPa

10

Table 2(b)

| Sample No. | Number of continuously repeated moldings | Green shaped article | | | Die used |
|---|---|---|---|---|---|
| | | Mold release property | Apparent cracks | Creases | |
| Sample No. 6- 1 (this invention) | 1 | good | none | none | test piece |
| Sample No. 6- 2 (this invention) | 1 | = | = | = | = |
| Sample No. 6- 3 (this invention) | 1 | = | = | = | = |
| Sample No. 6- 4 (this invention) | 6 | = | = | = | = |
| Sample No. 6- 5 (this invention) | 1 | = | = | very small amount | turbine rotor |
| Sample No. 6- 6 (this invention) | 1 | = | = | none | = |
| Sample No. 6- 7 (this invention) | 1 | = | = | = | = |
| Sample No. 6- 8 (this invention) | 1 | = | = | = | = |
| Sample No. 6- 9 (this invention) | 3 | = | = | = | = |
| Sample No. 6-10 (this invention) | 1 | = | = | = | = |
| Sample No. 6-11 (this invention) | 1 | = | = | = | piston cavity |
| Sample No. 6-12 (this invention) | 1 | = | = | = | = |
| Sample No. 6-13 (this invention) | 1 | = | = | = | = |
| Sample No. 6-14 (this invention) | 1 | = | = | very small amount | = |
| Sample No. 6-15 (this invention) | 1 | = | = | = | = |

* Only one linear crack was observed (Sample No. 6-11)

According to the molding method and molding apparatus of the present invention, an excellent shaped article having a good mold release property and having neither apparent cracks nor deformation can be obtained in a short molding time without causing leakages during the molding.

**Claims**

1. A method for molding a ceramics article, comprising the steps of:
   vacuum-kneading a ceramics mixture containing water and an organic binder,
   extruding said mixture into a ceramics batch (39),
   pouring said ceramics batch (39) into a batch-retaining chamber (35),
   retaining once the batch (39) for a period of time in the batch-retaining chamber (35) under vacuum,

providing a die assembly which consists of an impermeable die (31, 32, 33) or of a combination of a permeable die and an impermeable die, a part of the molding surface of said impermeable die being constituted by a material having a contact angle with water of at least 80 degrees, and

passing the batch under pressure into said die assembly.

2. A method according to claim 1 in which the ceramics mixture comprises a powder, whose particle size satisfies the following equation:

(average particle size calculated from the particle size distribution)/(specific surface area particle size calculated by the adsorption method) $\leq 5$

3. A method according to claim 1 or claim 2 in which the material having a contact angle with water of at least 80 degrees is polytetrafluoroethylene, polyvinyl fluoride, polyvinylidene fluoride, polytrifluorochloroethylene, tetrafluoroethyleneperfluoroalkyl vinyl ether copolymer, polypropylene or wax.

4. A method according to any one of claims 1 to 3 in which the ceramics mixture further comprises a surfactant.

5. A method according to any one of claims 1 to 4 in which the pressure under which the die assembly receives the ceramics batch (39) is greater than 500kPa, and the ratio of the pouring speed ($cm^3$/s) of the ceramics batch (39) under pressure into the die assembly to the surface area ($cm^2$) of the molded ceramics article is in the range from 0.7 to 10.

6. A method according to any one of claims 1 to 5 in which the ceramics batch (39) is held in the die assembly under a pressure of from 0.5 to 100 MPa, at a temperature of from 5 to 20°C, for 1 to 200 seconds and in which the injection speed is from 50 to 1000 ml/s.

7. A molding apparatus for ceramics articles, comprising:

vacuum-kneading means for mixing a ceramics mixture containing water and an organic binder,
an extruder for producing a ceramics batch (39),
a batch-retaining chamber (35) for receiving and retaining said ceramics batch (39) for a period of time under vacuum,
a die assembly suitable to receive, under pressure, said batch from said batch-retaining chamber (35),
said die assembly having an impermeable die (31, 32, 33) or a combination of a permeable die and an impermeable die, a part of the molding surface of said impermeable die being constituted by a material having a contact angle with water of at least 80 degrees.

8. An apparatus according to claim 7 in which the die assembly has said combination of a permeable die and an impermeable die, and the permeable die has an average hole diameter of 0.1 to 50 $\mu$m or the permeable die has a two-layered structure and consists of a molding surface layer having an average hole diameter of 0.1 to 50 $\mu$m and a lower part layer having an average hole diameter of 50 to 500 $\mu$m.

**Patentansprüche**

1. Verfahren zum Formen eines Keramikerzeugnisses, folgende Schritte umfassend:
das Vakuum-Kneten eines Keramikgemisches, das Wasser und ein organisches Bindemittel enthält,
das Extrudieren des Gemisches zu einer Keramikcharge (39)
das Gießen der Keramikcharge (39) in eine Chargehaltekammer (35),
das einmalige Halten der Charge (39) in der Chargehaltekammer (35) unter Vakuum für einen Zeitraum bzw. eine Zeitperiode,
das Bereitstellen einer Formanordnung, die aus einer undurchlässigen Form (31, 32, 33) oder aus einer Kombination aus einer durchlässigen Form und einer undurchlässigen Form besteht, wobei ein Teil der Formungsoberfläche der undurchlässigen Form aus einem Material mit einem Kontaktwinkel mit Wasser von zumindest 80° besteht, und
das Befördern der Charge unter Druck in die Formanordnung.

2. Verfahren nach Anspruch 1, bei dem das Keramikgemisch ein Pulver umfaßt, dessen Teilchengröße der folgenden Gleichung entspricht:

(aus der Teilchengrößenverteilung berechnete durchschnittliche Teilchengröße)/(nach dem Adsorptionsverfahren berechnete spezifische Oberflächen-Teilchengröße) $\leq$ 5

3. Verfahren nach Anspruch 1 oder 2, bei dem das Material mit einem Kontaktwinkel mit Wasser von zumindest 80° Polytetrafluorethylen, Polyvinylfluorid, Polyvinylidenfluorid, Polytrifluorchlorethylen, Tetrafluorethylen-Perfluoralkylvinylether-Copolymer, Polypropylen oder Wachs ist.

4. Verfahren nach einem der Ansprüche 1 bis 3, bei dem das Keramikgemisch weiters ein Tensid umfaßt.

5. Verfahren nach einem der Ansprüche 1 bis 4, bei dem der Druck, unter dem die Formanordnung die Keramikcharge (39) aufnimmt, größer als 500 kPa ist und das Verhältnis zwischen der Gießgeschwindigkeit (cm$^3$/s) der Keramikcharge (39) unter Druck in die Formanordnung und der Oberfläche (cm$^2$) des geformten Keramikerzeugnsises im Bereich von 0,7 bis 10 liegt.

6. Verfahren nach einem der Ansprüche 1 bis 5, bei dem die Keramikcharge (39) in der Formanordnung 1 bis 200 s lang unter einem Druck von 0,5 bis 100 MPa bei einer Temperatur von 5 bis 20°C gehalten wird und bei dem die Einspritzgeschwindigkeit 50 bis 1000 ml/s beträgt.

7. Formungsvorrichtung für Keramikerzeugnisse, umfassend:

Vakuumknetmittel zum Mischen eines Keramikgemisches, das Wasser und ein organisches Bindemittel enthält,

einen Extruder zur Herstellung einer Keramikcharge (39),

eine Chargehaltekammer (35) zum Aufnehmen und Halten der Keramikcharge (39) für einen Zeitraum bzw. eine Zeitperiode unter Vakuum,

eine Formanordnung, die dazu geeignet ist, die Charge von der Chargehaltekammer (35) unter Druck aufzunehmen,

wobei die Formanordnung eine undurchlässige Form (31, 32, 33) oder eine Kombination aus einer durchlässigen Form und einer undurchlässigen Form aufweist, wobei ein Teil der Formungsoberfläche der undurchlässigen Form aus einem Material mit einem Kontaktwinkel mit Wasser von zumindest 80° besteht.

8. Vorrichtung nach Anspruch 7, bei der die Formanordnung die Kombination aus einer durchlässigen Form und einer undurchlässigen Form aufweist und die durchlässige Form einen durchschnittlichen Lochdurchmesser von 0,1 bis 50 µm aufweist oder die durchlässige Form eine zweischichtige Struktur aufweist und aus einer Formungsoberflächenschicht mit einem durchschnittlichen Lochdurchmesser von 0,1 bis 50 µm und einer unteren Schicht mit einem durchschnittlichen Lochdurchmesser von 50 bis 500 µm besteht.

**Revendications**

1. Méthode pour mouler un article en céramiques, comprenant les étapes de :
   malaxage sous vide d'un mélange de céramiques contenant de l'eau et un organique,
   extrusion dudit mélange en un lot de céramiques (39),
   versement dudit lot (39) de céramiques dans une chambre (35) de rétention de lot,
   rétention une fois du lot (39) pendant une période de temps dans la chambre (35) de rétention du lot sous vide,
   fourniture d'un assemblage de matrice qui consiste d'une matrice imperméable (31, 32, 33) ou d'une combinaison d'une matrice perméable et d'une matrice imperméable, une partie de la surface de moulage de ladite matrice imperméable étant constituée par un matériau ayant un angle de contact avec l'eau d'au moins 80 degrés, et
   passage du lot sous pression dans ledit assemblage de matrice.

2. Méthode selon la revendication 1 dans laquelle le mélange de céramiques comprend une poudre, dont la taille des particules satisfait l'équation suivante :

(taille moyenne des particules calculée à partir de la distribution de taille des particules) / (taille des particules par surface spécifique calculée par la méthode d'adsorption) $\leq$ 5.

3. Méthode selon la revendication 1 et la revendication 2 dans laquelle le matériau ayant un angle de contact avec l'eau d'au moins 80 degrés est le polytétrafluoroéthylène, le fluorure de polyvinyle, le fluorure de polyvinylidène, le polytrifluorochloroéthylène, un copolymère tétrafluoroéthylène-perfluoroalkyl vinyl éther, du polypropylène ou une cire.

4. Méthode selon l'une quelconque des revendications 1 à 3 dans laquelle le mélange de céramiques comprend de plus un surfactant.

5. Méthode selon l'une quelconque des revendications 1 à 4 dans laquelle la pression sous laquelle l'assemblage de matrice reçoit le lot (39) de céramiques est supérieure à 500 kPa, et le rapport de la vitesse de versement (cm$^3$/s) du lot de céramiques (39) sous pression dans l'assemblage de matrices à la surface spécifiques (cm$^2$) de l'article en céramiques moulé est dans l'intervalle de 0,7 à 10.

6. Méthode selon l'une quelconque des revendications 1 à 5 dans laquelle le lot (39) de céramiques est maintenu dans l'assemblage de matrice sous une pression de 0,5 à 100 MPa, à une température de 5 à 20°C, pendant 1 à 200 secondes et dans laquelle la vitesse d'injection est de 50 à 1000 ml/s.

7. Appareil de moulage pour articles en céramiques, comprenant :

    un moyen de malaxage sous vide pour mélanger un mélange de céramiques contenant de l'eau et un liant organique,
    une extrudeuse pour produire un lot de céramiques (39),
    une chambre (35) de rétention de lot pour recevoir et retenir ledit lot de céramiques (39) pendant une période de temps sous vide,
    un assemblage de matrice approprié pour recevoir, sous pression, ledit lot provenant de ladite chambre de rétention de lot (35),
    ledit assemblage de matrice ayant une matrice imperméable (31, 32, 33) ou une combinaison d'une matrice perméable et d'une matrice imperméable, une partie de la surface de moulage de ladite matrice imperméable étant constituée par un matériau ayant un angle de contact avec l'eau d'au moins 80 degrés.

8. Appareil selon la revendication 7 dans lequel P'assemblage de matrice a ladite combinaison d'une matrice perméable et d'une matrice imperméable, et la matrice perméable a un diamètre de trous moyen de 0,1 à 50 µm ou la matrice perméable a une structure à deux couches et consiste d'une couche de surface de moulage ayant un diamètre de trous moyen de 0,1 à 50 µm et une couche de partie inférieure ayant un diamètre de trous moyen de 50 à 500 µm.

# FIG_1

# FIG_2

# FIG_3